# EUROPÄISCHE PATENTANMELDUNG

(11) **EP 0 689 961 A2**
(43) Veröffentlichungstag der Anmeldung: **03.01.1996**
(21) Anmeldenummer: 95109576.9
(22) Anmeldetag: 21.06.1995
(51) Int. Cl.: B60Q 1/32

(54) **Kraftfahrzeugbeleuchtungsanordnung und Verfahren zu ihrem Anbringen und Anschliessen**

(30) Priorität: 27.06.1994 DE 4422393
(71) Anmelder: Hirschle, Reiner, D-89191 Nellingen (DE)
(72) Erfinder: Hirschle, Reiner, D-89191 Nellingen (DE)
(74) Vertreter: Sandmann, Joachim, Dr.

(57) **Zusammenfassung**

Eine Leuchte 3 (Seitenmarkierungsleuchte) für ein Lastkraftfahrzeug ist mittels eines Befestigungsbügels 7 mit zwei Spreizankern 9 am Fahrzeug befestigbar. Die Leuchte 3 weist ein Leuchtengehäuse 12 mit einem vorspringenden Leuchtensockel 13 auf, der in einer Lagerbohrung 11 des Befestigungsbügels 7 aufgenommen und durch einen sich am Befestigungsbügel 7 abstützenden sowie in den Leuchtensockel eingreifenden Federring 22 gesichert ist. Im Leuchtensockel 13 ist ein Kanal 15 in Form einer Vertiefung ausgebildet, die durch einen Rastdeckel 18 abgedeckt werden kann. In den Kanal 15 läßt sich ein allen oder einer Gruppe von Leuchten 3 zugeordnetes Stromkabel 30 von rechteckigem Querschnitt einlegen, in das zwei im Abstand parallel zueinander verlaufende Adern eingebettet sind. Die Leuchte 3 weist zwei in den Kanal 15 vorspringende spitze Kontaktstifte 35 auf, die selbsttätig in das Stromkabel 30 eindringen und den Aderkontakt bewirken.

Dieses Leuchtensystem läßt sich schnell und ohne besondere Werkzeuge an beliebiger Stelle installieren und verkabeln, was ebenso für Begrenzungsleuchten (Positionsleuchten) gilt.

## Beschreibung

Die Erfindung bezieht sich auf eine Kraftfahrzeugbeleuchtungsanordnung mit mehreren elektrischen Leuchten, insbesondere Seitenmarkierungsleuchten und/oder Begrenzungsleuchten eines Lastkraftfahrzeugs, die über ein Stromkabel an eine Stromquelle angeschlossen sind.

Insbesondere für den Güterverkehr eingesetzte Lastkraftwagen sind über die der eigenen Sicht bei Dunkelheit dienenden Scheinwerfer sowie die Schlußleuchten hinaus mit zahlreichen weiteren Leuchten versehen. Dazu zählen Seitenmarkierungsleuchten, die auf gleicher Höhe in Abständen längs beider Seiten des Fahrzeugs angeordnet sind und seitlich sowie in gelber Farbe abstrahlen. Als weitere Leuchten kommen Begrenzungsleuchten (Positionsleuchten) in Betracht, die an den vier oberen Ecken des Fahrzeugaufbaus angeordnet sind, wobei die beiden vorderen Leuchten in weiß nach vorne und die beiden hinteren Leuchten in rot nach hinten strahlen.

Bisher werden die Seitenmarkierungsleuchten mit mindestens zwei Befestigungsschrauben montiert, unter Lösen von mindestens einer Mutter justiert, um unabhängig von der Bordwand des Lastkraftwagens, an der die Leuchten angebracht sind, eine waagerechte Ausrichtung der im allgemeinen rechteckförmigen Leuchten zu erzielen, und der Reihe nach durchverkabelt, wozu von jeder Leuchte zur nächsten Einzelkabel verlegt und mit ihren Enden an die betreffenden Leuchten angeschlossen werden.

Die Installation eines solchen konventionellen Leuchtensystems ist arbeits- und zeitaufwendig und nur unter Einsatz von Werkzeugen durchführbar.

Dementsprechend liegt der Erfindung die Aufgabe zugrunde, die eingangs beschriebene Kraftfahrzeugbeleuchtungsanordnung so auszubilden, daß sie sich auf einfache Weise schnell und an beliebiger Stelle anbringen sowie elektrisch anschließen läßt.

Diese Aufgabe wird erfindungsgemäß dadurch gelöst, daß den Leuchten oder zumindest einer Gruppe von Leuchten ein gemeinsames Stromkabel mit zwei Adern zugeordnet ist, das die Leuchten in Reihe passiert und dabei jeweils von einem Kanal im Leuchtengehäuse aufgenommen ist, der einen dem Stromkabel angepaßten Querschnitt aufweist und in den zwei spitz auslaufende Kontaktstifte der Leuchte ragen, die unter Herstellung metallischen Kontakts mit jeweils einer Ader in das quer zu den Kontaktstiften durch den Kanal verlaufende Stromkabel eindringen.

Zweckmäßige Ausgestaltungen und Weiterbildungen dieser Kraftfahrzeugbeleuchtungsanordnung sowie deren erfindungsgemäß vorgesehenes Anbringen und Anschließen ergeben sich aus den Unteransprüchen.

Infolge der erfindungsgemäß vorgesehenen Aderdurchdringungskontaktierung kann ein einziges entsprechend langes, nicht durch Konfektionierung unterbrochenes Stromkabel vorgesehen werden, an das sich eine grundsätzlich beliebige Anzahl von Leuchten anschließen läßt, was ohne Werkzeugeinsatz schnell exakt und sicher durchgeführt werden kann. Beispielsweise kann ein mit entsprechender Überlänge am Boden des Fahrzeugaufbaus verlegtes Stromkabel im Bereich jeder Seitenmarkierungsleuchte nach außen vorgezogen und in den vorzugsweise als Vertiefung ausgeführten Kanal des betreffenden Leuchtensockels eingelegt werden, was - ggf. in Verbindung mit dem Anbringen (Andrücken) der Leuchte - bereits selbsttätig den elektrischen Anschluß bewirkt. Dabei ermöglicht das mehreren Leuchten gemeinsame zweiadrige Stromkabel eine Anbringung von Leuchten auch an solchen Stellen des Fahrzeugaufbaus, an denen die Voraussetzungen für einen Massekontakt fehlen oder ungünstig sind.

Dementsprechend ist es auch sehr einfach möglich, nachträglich entweder bereits angeschlossene Leuchten durch Entfernung des Stromkabels aus dem Kanal elektrisch stillzulegen oder zusätzliche Leuchten durch Einbringen des Stromkabels in deren Kanal elektrisch anzuschließen, soweit dieses gewünscht wird. Dabei bedarf es keiner besonderen Fähigkeiten wie denjenigen eines Elektrikers, noch sind spezielle Werkzeuge beispielsweise zum Abisolieren von Adern eines Stromkabels erforderlich.

Für die erfindungsgemäß vorgesehene Verwendung geeignete Stromkabel mit zwei im Abstand nebeneinander in einem gummiähnlichen oder schaumstoffartigen Isoliermaterial eingebetteten Adern sind bekannt, beispielsweise in Form von Flachkabeln mit rechteckigem Querschnitt, wobei die spitz auslaufenden Kontaktstifte problemlos in das Isoliermaterial bis in Aderkontakt eindringen können.

Ein Ausführungsbeispiel der Erfindung wird nachfolgend anhand einer schematischen Zeichnung näher erläutert. Es zeigen:
- Figur 1: ein mit der erfindungsgemäßen Fahrzeugbeleuchtungsanordnung ausgestattetes Lastkraftfahrzeug in Seitenansicht;
- Figur 2: das Lastkraftfahrzeug gemäß Figur 1 in Rückansicht;
- Figur 3: eine der vorgesehenen Seitenmarkierungsleuchten mit ihrem Befestigungsbügel in einem vertikalen Querschnitt und in vergrößertem Maßstab;
- Figur 4: die Seitenmarkierungsleuchte gemäß Figur 3 in seitlicher Draufsicht, jedoch ohne den Befestigungsbügel und mit einem Kabelstück;
- Figur 5: eine Rückansicht des Leuchtensockels mit der in Figur 4 angedeuteten Verstellrasterung an der Rückseite des Leuchtengehäuses in einem weiter vergrößerten Maßstab;
- Figur 6: eine beim Kraftfahrzeug gemäß Figuren 1 und 2 vorgesehene vertikal ausgerichtete Begrenzungsleuchte mit einem vertikal durchgeführten Kabelabschnitt in längsgerichteter Draufsicht und in vergrößertem Maßstab;
- Figur 7: die Begrenzungsleuchte gemäß Figur 6 in einem Vertikalschnitt unter Veranschaulichung der Leuchtenbefestigung;
- Figur 8: eine Figur 6 entsprechende Darstellung, jedoch mit horizontal durchgeführtem Kabelabschnitt; und
- Figur 9: einen Figur 7 entsprechenden Vertikalschnitt zur Ausführung gemäß Figur 8.

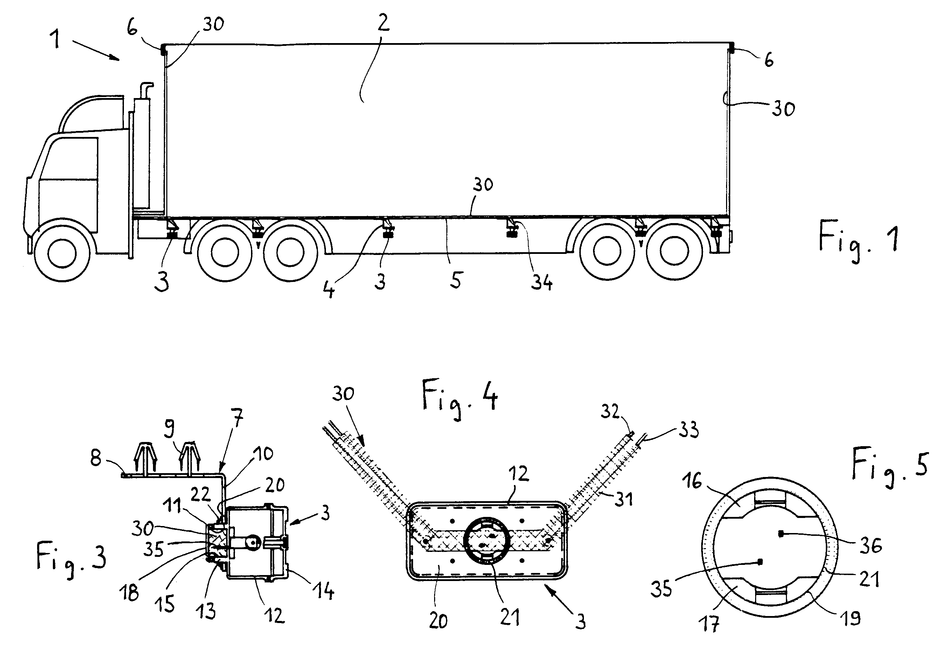

In Figuren 1 und 2 ist ein Lastkraftfahrzeug 1 mit fünf Radachsen dargestellt, das einen kastenförmigen Aufbau 2 aufweist, der den Laderaum umschließt. An jeder Seite des Lastkraftfahrzeugs sind sechs Seitenmarkierungsleuchten 3 vorgesehen, die in Längsabständen verteilt etwa in oberer Höhe der Fahrzeugräder angeordnet sind. Wie insbesondere aus Figur 4 zu ersehen, weisen die Seitenmarkierungsleuchten 3 eine etwa rechteckige Form auf und sind waagerecht ausgerichtet. Dabei sind die Seitenmarkierungsleuchten 3 an Querprofilen 4 unter dem Laderaumboden 5 befestigt.

Ferner sind vier Begrenzungsleuchten 6, auch Positionsleuchten genannt, an den oberen Ecken des Aufbaus 2 angeordnet, wobei die beiden vorderen Begrenzungsleuchten 6 nach vorne strahlen, während die beiden hinteren Begrenzungsleuchten 6 nach hinten strahlen.

Die Seitenmarkierungsleuchten 3 sind an den außenliegenden Enden der Querprofile 4 befestigt. Dazu ist gemäß Figur 3 jede Seitenmarkierungsleuchte 3 mit einem winkelförmigen Befestigungsbügel 7 versehen, der einen Befestigungsschenkel 8 mit zwei Spreizankern 9 aufweist, die durch angepaßte Bohrungen im waagerechten Schenkel des Querprofils 4 eingedrückt werden und so auf einfache Weise einen festen Sitz bewirken.

Der abwärts weisende Tragschenkel 10 des Befestigungsbügels 7 ist mit einer Lagerbohrung 11 versehen, durch die sich der vom Leuchtengehäuse 12 nach hinten bzw. einwärts vorspringende Leuchtensockel 13 erstreckt. Das die Glühbirne aufnehmende Leuchtengehäuse 12 ist durch eine angeschraubte Abdeckscheibe 14 verschlossen. Der Leuchtensockel 13 weist einen horizontal verlaufenden Kanal 15 auf, der als rückseitige Vertiefung zwischen einem oberen Sockelsteg 16 und einem unteren Sockelsteg 17 ausgebildet ist. Dieser rückseitig offene Kanal 15 läßt sich an seiner offenen Seite durch einen Rastdeckel 18 verschließen, der mit federnden Rastteilen an den beiden Sockelstegen 16 und 17 zusammenwirkt.

Die Sockelstege 16 und 17 bilden eine auf einem Zylindermantel liegende Lagerfläche 19, mit der die Leuchte drehbar in der Lagerbohrung 11 gelagert ist. Der nach hinten weisende Boden 20 des Leuchtengehäuses 12 ist mit einer in Figur 5 angedeuteten Verstellrasterung 21 versehen, die beispielsweise mit einer 1°-Winkelteilung ausgeführt sein kann. Damit läßt sich die Leuchte 3 durch entsprechende Drehung waagerecht ausrichten, wie es in Figur 4 dargestellt ist, wodurch befestigungsbedingte Ungenauigkeiten in der Lage des Befestigungsbügels 7 ausgeglichen werden können.

Die Verbindung zwischen der Leuchte 3 und dem Befestigungsbügel 7 ist durch eine Halterung 22 gesichert, die als kegelstumpfförmiger Preßring (Federring) ausgebildet ist, der sich mit einem Ende rückseitig am Tragschenkel 10 abstützt und mit dem anderen Ende in eine Ringnut am Leuchtensockel 13 eingreift, wozu der Federring 22 entsprechend verformt bzw. verpreßt wurde. Dieser Preßring oder Federring 22 bewirkt eine axiale Vorspannung, die einerseits eine ungewollte Verstellung der Winkelausrichtung der Leuchte 3 verhindert, andererseits aber eine der Verstellrasterung 21 gemäße Winkelverstellung der Leuchte 3 von Hand ermöglicht. Der Federring 22 kann - ebenso wie die Leuchte mit ihren Teilen 12 bis 18 und der Befestigungsbügel 7 mit den Spreizankern 9 - aus einem Kunststoff hergestellt sein.

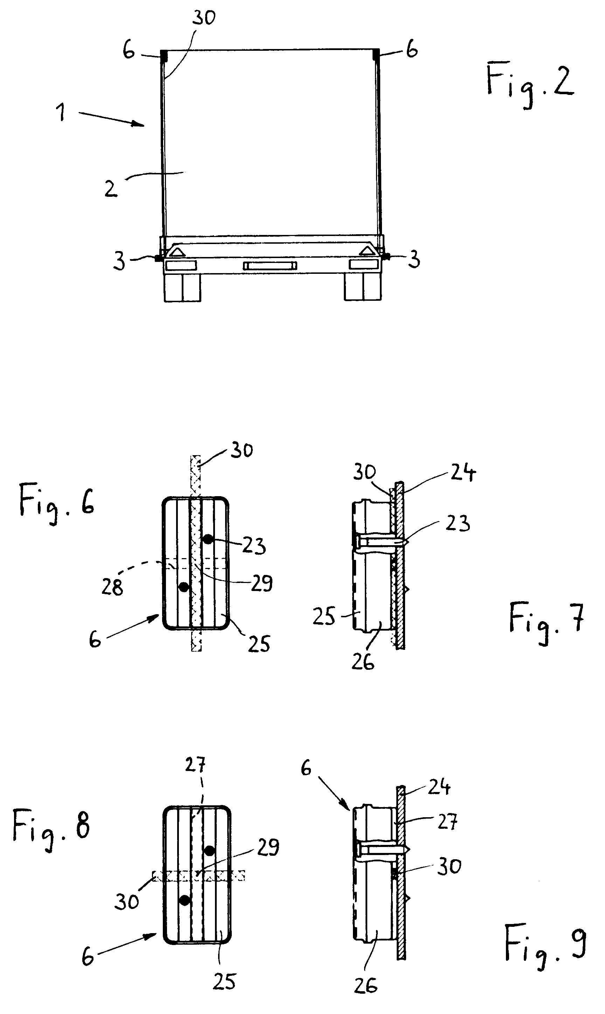

Aus Figuren 6 bis 9 ist zu ersehen, daß die Begrenzungsleuchten 6 wie die Seitenmarkierungsleuchten 3 eine im wesentlichen rechteckige Form aufweisen, jedoch in senkrechter Ausrichtung mittels zweier Schrauben 23 direkt an einem Trägerteil 24 des Aufbaus 2 angeschraubt sind. Dabei weisen die Begrenzungsleuchten 6 ein mit einer Abdeckscheibe 25 versehenes Leuchtengehäuse 26 auf, in dessen Boden zwei sich rechtwinklig kreuzende Kanäle in Form von Vertiefungen ausgebildet sind, nämlich ein Längskanal 27 und ein Querkanal 28, die in gleich tief ausgebildet sind und einen gemeinsamen Überschneidungsbereich 29 aufweisen.

Für die Erfindung in besonderer Weise charakteristisch ist die Verkabelung der Leuchten 3 und 6. Wie in Figur 1 angedeutet ist ein gemeinsames durchlaufendes Stromkabel 30 vorgesehen, das in üblicher Weise über einen Schalter an die Stromquelle des Lastkraftfahrzeugs 1 angeschlossen ist und sich über die gesamte Länge des Aufbaus 2 längs dessen Boden 5 erstreckt. Das Stromkabel 30 ist als Flachkabel mit rechteckigem Profil ausgeführt, bei dem in eine gummiähnliche oder schaumartige Isoliermasse 31 zwei Adern 32 und 33 im gleichbleibenden Abstand nebeneinander eingebettet sind, wie es Figur 4 veranschaulicht.

Im Bereich jeder Seitenmarkierungsleuchte 3 ist das Stromkabel 30 mit einer Kabelschleife 34 seitlich nach außen vorgezogen und durch den Kanal 15 geführt und in dieser Stellung durch den nachträglich angebrachten Rastdeckel 18 gehalten, wie es Figur 3 veranschaulicht. Das Leuchtengehäuse 12 weist zwei Kontaktstifte 35, 36 auf, die in den Kanal 15 vorspringen und jeweils ein spitzes Ende aufweisen. Dementsprechend dringen diese Kontaktstifte beim Einführen des Stromkabels 30 in den Kanal 15 in das Kabel ein und führen zu einem elektrischen Kontakt mit der Ader 32 bzw. 33.

Auch die in Figur 1 dargestellte vordere Begrenzungsleuchte 6 kann mit einer entsprechend langen Kabelschleife an das gemeinsame Stromkabel 30 angeschlossen sein, falls nicht ein gesondertes Stromkabel für die beiden vorderen Begrenzungsleuchten vorgesehen wird. Hinter der hinteren Seitenmarkierungsleuchte 3 ist das Stromkabel 30 gemäß Figur 1 zur hinteren Begrenzungsleuchte 6 hochgeführt.

Die Ausbildung der Begrenzungsleuchte 6 mit zwei sich kreuzenden Kanälen 27 und 28 hat den Vorteil, daß das Stromkabel 30 je nach der vorgesehenen Verlegung und der Leuchtenanordnung wahlweise in vertikaler oder in horizontaler Richtung durch das Leuchtengehäuse 26, also entweder durch den Längskanal 27 oder durch den Querkanal 28, geführt werden kann. Damit in beiden Fällen der erforderliche zweifache Aderkontakt entsteht, sind die beiden Kontaktstifte 35 und 36 im Überschneidungsbereich 29 und mit diagonaler Anordnung vorgesehen, wie sie auch bei den Seitenmarkierungsleuchten 3 gemäß Figuren 4 und 5 vorhanden ist.

Aus der vorstehenden Beschreibung ist ersichtlich, daß sich die Kraftfahrzeugbeleuchtungsanordnung besonders einfach anbringen und elektrisch anschließen läßt, und zwar weitgehend von Hand ohne Einsatz besonderer Werkzeuge. Dabei ist es sogar möglich, alle Leuchten 3 und 6 auf beiden Seiten des Lastkraftfahrzeugs 1 mit einem einzigen durchlaufenden Stromkabel 30 zu versorgen. Alternativ kann natürlich auch für jede Fahrzeugseite ein eigenes Stromkabel vorgesehen werden, das dann an der betreffenden hinteren Begrenzungsleuchte 6 endet.

## Patentansprüche

1. Kraftfahrzeugbeleuchtungsanordnung mit mehreren elektrischen Leuchten (3, 6), insbesondere Seitenmarkierungsleuchten (3) und/oder Begrenzungsleuchten (6) eines Lastkraftfahrzeugs (1), die über ein Stromkabel (30) an eine Stromquelle angeschlossen sind, **dadurch gekennzeichnet,** daß den Leuchten (3, 6) oder zumindest einer Gruppe von Leuchten ein gemeinsames Stromkabel (30) mit zwei Adern (22, 23) zugeordnet ist, das die Leuchten (3, 6) in Reihe passiert und dabei jeweils von einem Kanal (15; 27, 28) im Leuchtengehäuse (12, 26) aufgenommen ist, der einen dem Stromkabel (30) angepaßten Querschnitt aufweist und in den zwei spitz auslaufende Kontaktstifte (35, 36) der Leuchte (3, 6) ragen, die unter Herstellung metallischen Kontakts mit jeweils einer Ader (22 bzw. 23) in das quer zu den Kontaktstiften (35, 36) durch den Kanal (15; 27, 28) verlaufende Stromkabel (30) eindringen.

2. Kraftfahrzeugbeleuchtungsanordnung nach Anspruch 1, **dadurch gekennzeichnet,** daß das Stromkabel (30) als Flachkabel von rechteckigem Querschnitt ausgeführt ist.

3. Kraftfahrzeugbeleuchtungsanordnung nach Anspruch 1 oder 2, **dadurch gekennzeichnet,** daß der Kanal (15; 27, 28) als Vertiefung in der Rückseite des Leuchtengehäuses (12, 26) ausgebildet ist.

4. Kraftfahrzeugbeleuchtungsanordnung nach Anspruch 3, **dadurch gekennzeichnet,** daß der Kanal (15) durch einen am Leuchtengehäuse (12) insbesondere durch Verrastung anbringbaren Deckel (18) verschließbar ist.

5. Kraftfahrzeugbeleuchtungsanordnung nach Anspruch 1 oder 2, **dadurch gekennzeichnet,** daß dem Leuchtengehäuse ein separates Sockelteil zugeordnet ist, das mit dem Leuchtengehäuse insbesondere mittels Schrauben verbindbar ist, und daß der Kanal als Vertiefung in einer oder beiden einander zugewandten Stirnflächen des Sockelteils und/oder des Leuchtengehäuses ausgebildet ist.

6. Kraftfahrzeugbeleuchtungsanordnung nach einem der Ansprüche 1 bis 5 mit Seitenmarkierungsleuchten (3), **dadurch gekennzeichnet,** daß jeder Seitenmarkierungsleuchte (3) ein insbesondere winkelförmiger Befestigungsbügel (7) mit einer Befestigungseinrichtung (9) zum Verbinden mit dem Fahrzeug (1) und einer Lagereinrichtung (11) zum Anbringen der Leuchte (3) zugeordnet ist.

7. Kraftfahrzeugbeleuchtungsanordnung nach Anspruch 6, **dadurch gekennzeichnet,** daß die Lagereinrichtung eine Lagerbohrung (11) im Befestigungsbügel (7) aufweist, durch die sich ein Leuchtensockel (13) erstreckt, an dem eine rückseitig am Bügel (7) abgestützte Halterung (22) angreift.

8. Kraftfahrzeugbeleuchtungsanordnung nach Anspruch 7, **dadurch gekennzeichnet,** daß die Halterung (22) unter axialer Vorspannung steht und das Leuchtengehäuse (12) gegen die Vorderseite des Bügels (7) anzieht.

9. Kraftfahrzeugbeleuchtungsanordnung nach Anspruch 8, **dadurch gekennzeichnet,** daß die Halterung ein verformter kegelstumpfförmiger Preßring (22) ist, der mit seinem einen Ende an der Rückseite des Bügels (7) anliegt und mit seinem anderen Ende in eine Ringnut am Leuchtensockel (13) eingreift.

10. Kraftfahrzeugbeleuchtungsanordnung nach Anspruch 8 oder 9, **dadurch gekennzeichnet,** daß der Leuchtensockel (13) drehbar in der Lagerbohrung (11) des Bügels (7) gelagert ist und zwischen dem Leuchtengehäuse (12) und der Bügelvorderseite eine feine Winkelausrichtungen der Leuchte (3) gegenüber dem Befestigungsbügel (7) vorgebende Verstellrasterung (21) vorgesehen ist, auf welche die Vorspannung der Halterung bzw. des Preßrings (22) abgestimmt ist.

11. Kraftfahrzeugbeleuchtungsanordnung nach einem der Ansprüche 1 bis 10, insbesondere mit Begrenzungsleuchten (6), **dadurch gekennzeichnet,** daß zumindest einzelne Leuchten (6) ein Leuchtengehäuse (26) mit zwei sich rechtwinklig kreuzenden Kanälen (27, 28) für die wahlweise horizontale oder vertikale Durchführung des Stromkabels (30) aufweisen und die beiden Kontaktstifte (25, 36) in diagonaler Ausrichtung im Überschneidungsbereich (29) der beiden Kanäle (27, 28) angeordnet sind.

12. Verfahren zum Anbringen und Anschließen der Kraftfahzeugbeleuchtungsanordnung gemäß einem der Ansprüche 1 bis 11, **dadurch gekennzeichnet,** daß die Leuchten (3, 6) an den gewünschten Stellen des Lastkraftfahrzeugs (1) angebracht werden, daß wenigstens ein Stromkabel (30) mit einer Überlänge verlegt und dabei längs wenigstens einiger der Leuchten (3, 6) geführt wird, daß im Bereich der betreffenden Leuchten (3, 6) jeweils eine Kabelschleife (34) aus der Überlänge gebildet und in den Kanal (15; 27, 28) des Leuchtengehäuses (12, 26) eingelegt wird und daß der Kanal (15; 27, 28) unter Bewirkung und/oder Sicherung des Aderkontakts zwischen den Kontaktstiften (35, 36) und den Adern (22, 23) des Stromkabels (30) durch Befestigen der Leuchte quer zur Kanalerstreckung verschlossen wird.

13. Verfahren nach Anspruch 12, **dadurch gekennzeichnet,** daß das Stromkabel (30) mit der Überlänge innerhalb des Fahrzeugaufbaus (2) verlegt wird, aus dem die Kabelschleifen (34) nach außen vorgezogen werden, bevor sie in den Kanal (15; 27, 28) des betreffenden Leuchtengehäuses (12, 26) eingelegt werden.
